# EUROPEAN PATENT APPLICATION

(11) **EP 2 383 089 A1**
(43) Date of publication of application: **02.11.2011**
(21) Application number: 10161522.7
(22) Date of filing: 29.04.2010
(51) Int. Cl.: B29B 17/02, D21C 5/02, E04B 1/74

(54) **Method for recycling sheet material coated with a release agent and uses of the thus recycled material**

(71) Applicant: RecuLiner BVBA, 3450 Geetbets (BE)
(72) Inventor: Van Pottelbergh, Eric, 3450 Geetbets (BE); Verhasselt, Bart, 2830 Willebroek (BE)
(74) Representative: BiiP cvba

(57) **Abstract**

The present invention concerns a method for treating waste material comprising:
• Collecting release coated cellulose or polymeric sheets from producers and end- users thereof in the form of dense, bulky masses, such as rolls and stacks;
• Pre-shredding the dense, bulky masses of release coated sheets into smaller, less dense masses in preparation to the following process steps;
• Preparing the pre-shredded material by mixing, separating foreign bodies like metals, etc., and feeding it to a primary grinding station (3,23,24);
• Grinding the materials into small pieces, of the desired size, preferably down to less than 1 mm;
• Adding additives selected from flame retardant, hydrophobic material, pesticide and mixtures thereof and mixing them with the recycled material;
• Optionally forming a batt or a sheet by a wet process and/or by adding a binder.

## Description

### Technical Field

The present invention relates to a method for mechanically treating waste material consisting of cellulose or polymeric sheet material coated with a release agent, such as used as liner for self-adhesive labels and films. In particular, the treated waste material can be transformed into insulation material or as recycled paper, the latter requiring the prior separation of the release agent from the sheet material.

### Background for the invention

Self adhesive labels, films, and tapes have become very popular for their versatility and ease of use, since no extra glue is required to make them adhere to a substrate. They are used extensively in offices and by school children of course, but also large volumes are used by industries for labelling their products. The self-adhesive labels are provided attached to a release liner made of paper or a polymeric carrier and usually coated at least on one side with a release agent, most often consisting of a silicone release layer, which provides a release effect against the adhesive of the label. Other release agents are sometimes used, such as wax, paraffin, low surface energy fluorinated compounds, etc. Examples of silicone coated liners are given in US5275855, JP07279099, and US6036234. Silicone or other release agent coated liners are also used more generally as backing in the production of films, such as PVC films. The total global consumption of release liners in 2008 is believed to be around 32 Billion square meter of coated product, which is equal to 75% of the surface area of Switzerland. Approximately 85% of this material is paper based and 1 5% is plastic based (cf. http://en.wikipedia.org/wiki/Release_liner).

After use of the labels, films or tapes supported on said carriers, the liners are pure waste and must be disposed of. Considering the volumes mentioned above, this results in a great source of waste, which is coming under the scrutiny of several governments which intend to tax the disposal thereof as packaging material. The issue is rendered even more sensitive for cellulose release liners because the cellulose carriers are usually made of virgin material which has never gone through any recycling cycle yet. Recycling paper coated with a release agent for making printing or packaging paper is possible but difficult without loss in quality because of insufficient disintegration of the fibres and sticking of resin particles on the rolls and felts due to the release coating. Solutions to recycle silicone coated paper were proposed in US5567272 and EP587000, requiring the use of salts of phosphoric esters of fluorinated alkanols to chemically separate the silicone release agent from the cellulose sheet carrier, the latter being forwarded to a recycled paper manufacturing line.

The building and transportation industries are making more and more use of cellulosic materials coming from old newspaper, cardboard, etc. to manufacture heat and acoustic insulating materials in the form of loose fibrous materials, fibrous mats with or without skins, panels of varying stiffness, and even hollow blocks; the manufacture of blocks and panels may require the use of a binder, a glue or a cement. Cellulose insulating material has a much lower "embodied energy" than e.g., glasswool or rockwool insulation, wherein the embodied energy is the sum of the energy to transport the raw material to the manufacturing facility + the energy for manufacturing the product + the energy to deliver the manufactured product. General information concerning cellulose insulating materials can be found e.g., in:
http://www.ownerbuilderonline.com/blown-cellulose-insulation.html,
http://www.cellulose.org/CIMA/GreenestOfTheGreen.php;
http://www.youtube.com/watch?v=bwcblg6g5Cs&feature=related.

DE196553243 discloses a heat and acoustic insulating material made of cellulose fibres from old paper and impregnated with e.g. boric acid or salts thereof as flame retardant and against formation of mould, wherein the cellulose fibres come at least partly from sticky paper labels. This material can then be used as such by spraying it against a surface. DE4334200 discloses a process for producing thermally insulating materials from waste paper by means of a mild hydromechanical treatment with subsequent drying using hot air. The boards or mats formed therefrom have a very low specific density, from which a high thermal insulation value results.

WO2002090682 discloses sound insulation partitions comprising at least a substantially homogeneous self-supporting rectangular cellulose mat having a density ranging between 200 and 800 kg/m³, said mat essentially consisting of fibres derived from the treatment of practically lignin-free recycled papers or paperboards, the bond between the fibres within the mat being obtained at least partly during the production of the mat by wet process.

DE4402244 discloses a sound and heat insulating material made from a dried, aqueous suspension containing 10-50 wt% chopped waste paper and 90-10 wt% animal and/or plant fibres such as hairs, short wool fibres, etc. The mixed suspension is placed on a sheet former, in particular on a sieve, where the water is removed. A flat flexible mat is formed and subsequently dried and finished.

DE19835090 discloses a method of production of cellulose insulation materials including the control of various parameters in the mill to obtain a homogeneous material comprising additives.

DE3641464 discloses an insulating board made of a mixture of old newspapers free fom any surface treatment or fillers, natural fibres, and a glue and/or reaction promoter. EP061 71 77 discloses a skin/core building element for heat insulation and vibration damping wherein the core is made of a filler of paper like material and thin thermoplastic component to act as binder upon melting.

DE4403588 discloses heat insulation components constructed in the form of hollow blocks and prefabricated wall boards, produced, in particular, from pulped, water-resistant old paper, such as old labels, stickers, high-gloss paper, advertising posters and billboards (signs), mixed with water, cement and sand. In particular, a preferred mixture ranges from 50 vol% to 80 vol% of water-resistant old paper, from 10 vol% to 20 vol% of cement, and from 10 vol% to 60 vol% of sand.

US2009/0173464 discloses an acoustic panel comprising from 10-40 wt% cellulosic fibres, 0-30 wt% gypsum, 0-15 wt% starch and other components. Similarly, DE10336569 discloses a fire-resistant gypsum fibreboard made from a mixture of 87-78% gypsum and 13-22% cellulose fibres made from used paper as a reinforcing component and a 35-50% boric acid based on the fibre weight for raising the flame resistance.

In the transportation industry, DE202005501 14581 discloses a cellulose based insulation material for the exhaust system of a combustion engine and US2002025421 discloses a sound absorbing insulation material containing cellulose for the cabin of a motor vehicle. DE4331 567 discloses a light weight fire protection element for the aircraft industry made of waste paper mixed with a special binder, resulting in an "apparently paradoxical fireproof material made of paper".

There remains in the art a need for finding routes to recycle silicone coated carriers of the type used as liners for labels. In parallel, there remains a lot to do in the fields of recycled paper and of insulation materials for the building, transportation, and other industries to provide an insulation material which is cheap, and has good thermal and acoustic insulation and damping properties.

### Summary of the invention

The present invention concerns method for treating waste material in the form of release coated cellulose or polymeric sheets comprising the following steps:
(a) Collecting release coated cellulose or polymeric sheets from producers and end-users thereof in the form of dense, bulky masses, such as rolls and stacks;
(b) Pre-shredding the dense, bulky masses of release coated sheets into smaller, less dense masses in preparation to the following process steps;
(c) Preparing the pre-shredded material by mixing, separating foreign bodies like metals, etc., and feeding it to a grinding station;
(d) In a grinding station, shredding and grinding the materials into small pieces, preferably into stripes of an average length comprised between 5 and 30 mm, more preferably, between 7 and 20 mm, most preferably between 10 and 15 mm and optionally comminuting the small pieces into smaller particules having an average particle size smaller than 4 mm, preferably smaller than 2 mm; more preferably smaller than 1 mm;
(e) Optionally adding additives selected from flame retardant, hydrophobic material, pesticide and mixtures thereof and mixing them with the recycled material;
(f) Optionally forming a batt or a sheet by a wet process and/or by adding a binder.

The release coated cellulose or polymeric sheet material may be blended at some stage, preferably, but not exclusively, at stage (c) or (d), with cellulose or polymeric sheet waste material from other origins.

The present method is highly advantageous as it is possible for certain release agent coated sheets to mechanically separate, during the primary and /or secondary grinding operations, a substantial fraction of the release coating from the sheet carrier, in the absence of any chemical treatment. The two fractions may then be separated in a separating station, separating the incoming stream into a first, carrier rich fraction and a second, release agent rich fraction. The separating station may comprise one or more of a cyclone, a floatation station, a filter, and an ultrasonic or an electrostatic separation means. This embodiment is very advantageous as it permits the use of the carrier rich fraction to be furher processed to produce either insulation materials, e.g., in the form of insulation batts or sheets; or recycled paper. Note that insulation materials need not necessarily be formed from a carrier rich fraction, and may be obtained directly from the comminuted release coated cellulose or polymeric sheet material, possibly blended with e.g., comminuted waste paper such as newspaper, to yield insulation materials of different grades, qualities, and prices. The release agent rich fraction, on the other hand, may further be treated to become suitable for use as a filler or a binding agent in concrete, cementitious mixtures and coatings.

A preferred source of release coated cellulose or polymeric sheet material is liners for holding self-adhesive labels or films. They can conveniently be collected at the liner manufacturers, the self-adhesive label base material manufacturers, the label printers, the producers of goods on which are applied self-adhesive labels, and so on, all of them generating large volumes of such liners. The release agent is generally one of silicone, wax, paraffin, or fluorinated material.

The present invention also concerns the use of recycled release coated cellulose material or release coated thermoplastic film for the production of heat and/or sound insulation material. The expression "release coated" material meaning here that a material is coated with a release agent. The insulation material of the present invention may be used in several applications, such as for insulating thermally and/or acoustically any of:
- a wall or a panel in the field of buildings,
- a panel in the field of transportation,
- a sound dampening wall along roads;
- a quilted piece of garment or blanket, or for filling
- a mattress, or upholstery,
- a package in the field of packaging and storage and transportation of goods.

Alternatively the recycled release coated cellulose material may be used for the production of recycled paper, provided a sufficient fraction of the release agent was removed during the grinding process. Similarly, thermoplastic carriers, if sufficiently separated from their release coating, may be used in any thermoplastic recycling process well known in the art.

### Brief description of the Figures

For a fuller understanding of the nature of the present invention, reference is made to the following detailed description taken in conjunction with the accompanying drawings in which:
Figure 1: shows a transversal cut of a release coated carrier, typically used as liner for adhesive labels and the like.
Figure 2A: shows a schematic representation of a first embodiment of the method of the present invention.
Figure 2B: shows a schematic representation of a second embodiment of the method of the present invention.

### Detailed description of the invention

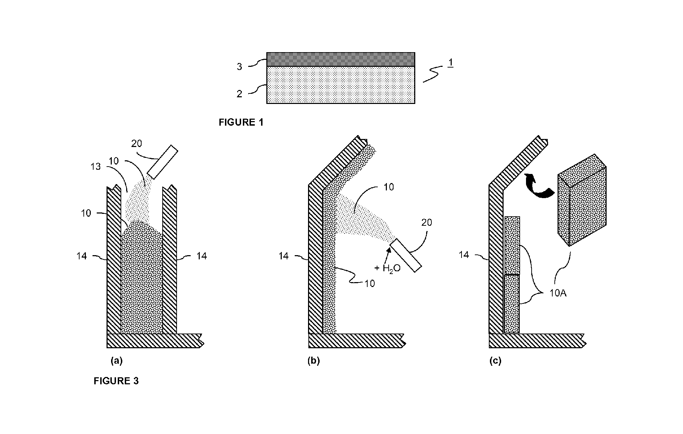

The present invention offers a new and advantageous solution to the difficult problem of recycling release coated sheet carriers (1), in particular silicone coated carriers which are widely used e.g., as liners for self adhesive labels, tapes, films and the like. As illustrated in Figure 1, such liners comprise a carrier (2) which is often a cellulose material, such as glassine paper or kraft paper, or alternatively, the carrier (2) can be a thermoplastic film, made of a polyolefin like PE or PP, or of a polyester such as PET, PEN, etc. In the present context, the term "sheet" is used to designate "a wide expanse or thin piece of something" (The Chambers Dictionary (2000)), which can be continuous or in discreet pieces of regular or irregular geometry, presented in any form such as rolled, stacked, or even crumpled. The carrier (2) is coated on one or two sides with a release agent (3), which provides a release effect against any type of sticky material such as the adhesive on a label. The release agents (3) most widely used on liners for adhesive labels, tapes, films, and the like, are crosslinkable silicones, but other release agents such as wax, paraffin, or a fluorinated material may also be found. Depending on the type of release agent and the intended use of the coated sheet material, the release agent is generally applied in an amount of the order 0.2 to 10.0 g / m², which is enough to degrade the quality of paper recycled with such cellulose based liners, because the disintegration of the fibres is insufficient and the resin particles tend to stick on the rolls and felts. This is a major inconvenience because unlike newspapers and the like, paper used for liners is generally produced from virgin material, which has never gone through any recycling cycle and has therefore a high ecological value. As reviewed above, solutions exist to overcome this drawback, but they require additional treatment steps and chemicals. The problem is even more acute when the carrier is a thermoplastic film since the generally crosslinked release coating cannot be easily separated from the carrier and may not be melted and reprocessed therewith.

The present invention provides a particularly advantageous alternative method for recycling both cellulose and thermoplastic based release coated carriers (1) such as liners. In the present invention, the release coated carrier may be processed to form a novel and advantageous insulating material (1 0) suitable for the sound and thermal insulation of buildings and of sound barriers along the roads, as well as of means of transportation such as automotive vehicles, trains, airplanes, and the like. It can also be used to fill quilted garments and blankets, or upholstery. Alternatively, in some cases of cellulose sheets coated with a release agent, it is possible to mechanically separate a sufficient amount of release agent from the cellulose carrier during a mechanical grinding step (23), (24). In this case, a cellulose rich fraction may be separated from a release agent rich fraction and further processed to produce, e.g., recycled paper.

The waste material can be collected from the producers and end users of for example adhesive labels, etc. like offices and administrations, but it is preferably collected from industries generating large amounts of waste liners. In particular, the waste material can be collected from liner manufacturers, self-adhesive labels manufacturers, label printers, producers of goods on which are applied self-adhesive labels, and the like. These represent a particularly advantageous source of "clean" waste release coated carriers, available in large quantities. Liner manufacturers will of course generate some waste, be it for insufficient quality of a particular product batch or at start or end of a roll. The manufacturers of self-adhesive label base material combine large rolls of release coated material with corresponding rolls of label base material to form a 4-layer laminate comprising the carrier, the release coating, the adhesive, and the label support. The thus produced laminate is then slit to the desired width of the labels, thus generating large amounts of waste. The same applies with label printers, if different from the former, as they may be in charge of the final cutting of the labels. Finally, the producers of goods on which are applied self-adhesive labels will generate as much liner waste as self-adhesive labels are applied on their goods. The amount of waste liner material thus generated can be huge and these industries are usually equipped with automated collecting means for collecting the waste liners, as described e.g., in WO2005110902. In most cases, the huge amounts of waste liners thus collected are in the form of dense, bulky masses, usually rolls or stacks.

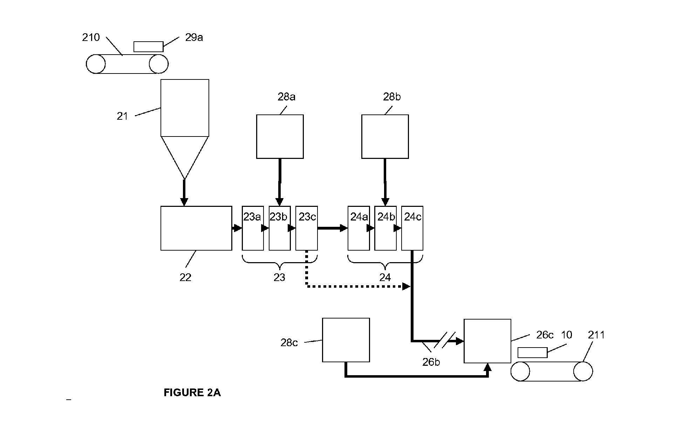

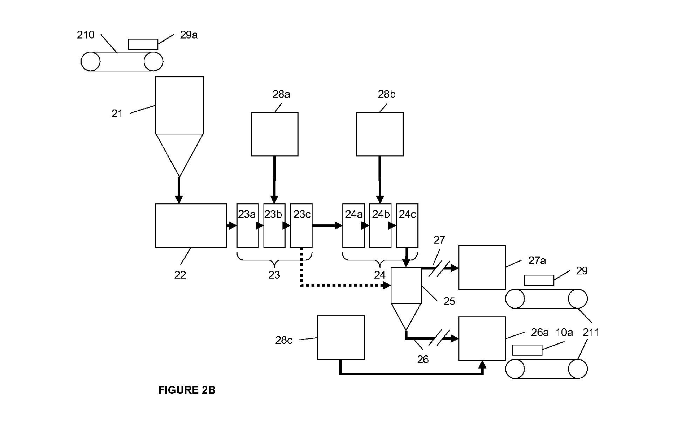

As illustrated in Figures 2(a) and 2(b), the collected release coated sheet waste material may be conveyed with supplying means (210), such as a conveying belt, to a supply station (21) in the form of dense, bulky masses (29a), such as rolls or stacks. Since dense, bulky rolls or stacks of liners cannot be ground as such in conventional grinding lines, the material is first supplied from supply station (21) to a pre-shredding station (22), breaking the dense masses of sheet material into looser chunks and lumps of smaller sizes suitable for being ground in conventional grinding stations. Pre-shredding stations suitable for the purpose of the present invention can be found, as illustrative purpose and in no way being restricted thereto, in the catalogue of the company SSI Shredding Systems (cf. e.g., www.ssiworld.com/watch/industrial_paper.htm and www.ssiworld.com/watch/printers-waste.htm). At this stage, the thus pre-shredded chunks of waste material are comparable in size and texture with more traditional sources of household waste sheet material comprising newspapers, magazines, packaging, etc., and may from here on be blended with other such sources of waste material. The release coated waste material, blended or not with other sources of waste material, can be prepared for primary grinding by mixing it and removing all foreign bodies such as metal clips, staples, plastic sheets in case of cellulose waste material, and the like.

At this stage, the material can be shredded and ground into particulate material in a grinding station (23), (24). It is often preferred to use several grinders, which can be grouped as a primary, coarser grinder (23) and a secondary, finer grinder (24). In the primary grinder (23), which may itself be composed of a cascade of several grinders (23a), (23b), (23c), the thus prepared waste material is shredded into small pieces, preferably into stripes of an average length comprised between 5 and 30 mm, more preferably, between 7 and 20 mm, most preferably between 10 and 1 5 mm. For some applications, this size is sufficiently small and the material needs no further comminution steps. The primary grinding station (23) may be connected to an additive supply means (28a) to add additives such as flame retardants, hydrophobic materials, pest repellents, and the like. The material may also be blended with other sources of waste material in the primary grinding station (23). For many applications, however, it is necessary to further reduce the size of the particles to lower than 10 mm.

In these cases, the stripes of waste material may be transferred to a secondary grinding station (24). Like the primary grinding station (23) the secondary grinding station (24) may be composed of a cascade of several grinders (24a), (24b), (24c). In the secondary grinding station (24), the size of the stripes is further reduced to an average particle size smaller than 4 mm, preferably smaller than 2 mm; more preferably smaller than 1 mm. Here again, the secondary grinding station (24) may be connected to an additive supply means (28b) to add additives. Suitable primary and secondary grinding stations may be found, for example, in www.scribd.com/full/27498804?access_key=key-2ed7qzqp8Ialulhgo86i.

As illustrated in Figure 2(a), from the end of the primary grinding station (23c) or, if it applies, of the secondary grinding station (24c), the particulate material 26(b) is transferred to a treating station (26c) for e.g., shaping the material into sheets, panels, batts, etc. and/or for packaging. The treating station (26c) may be connected to an additive supply means (28c) to supply e.g., water, an organic or mineral binder (e.g., cement), flame retardant, a dye, or the like. Treating station (26c) may comprise any means for shaping the recycled particles in any desired form, such as a press to form e.g., panels, means for dewatering the slurry to form sheets, in case water was added, curing means, such as convection, induction or IR-ovens, UV-station, etc, in case a binder is used, and the like. The recycled material (10) can then be removed with conveying means (211) and is ready for commercialisation as insulating material as dry particulate, sheets, panels, batts, and the like, as is discussed below. Alternatively, the comminuted material may be advantageously used as filler in concrete, cementitious mixtures and other building materials.

Another possible application for the thus recycled material (1 0) is as casing soil in replacement of, or complement to peat casing soil used for growing some vegetables and mushrooms. A study has been carried out with general waste paper with some encouraging, though not concluding results (cf. Sassine et al., J. App. Sci. Res., 1, (3): 277 (2005)). Some preliminary tests suggest that some of the problems mentioned in Sassine's paper could be solved with the material (10) produced from the present method thanks to the presence of the release agent, which yields a proper degree of hydrophobicity without affecting the mosture buffering effect of cellulose. For such end-applications, the treating station (26c) could include composting means and the additive supply means (28c) may include a source of nitrogen and possibly a source of a hydrophobic material. Composting and nitrogenation are preferably carried out off-line from the grinding line, as illustrated by the broken line (26b). It can also be taken profit of the advantageous behaviour of the materials produced with the method of the present invention by using it as additive to earth, to enhance the water balance and water flow in said earth and soil.

In some cases it is possible that a substantial fraction of the release coating is mechanically released from the carrier during the primary or secondary grinding stages (23), (24). This may happen in particular during the grinding stage, which generates intense shear stresses that may provoke cohesive failure in the carrier material, close and parallel to the interface between carrier and release coating. This phenomenon is observed in particular with cellulose carrier material of rather low density, wherein the hydrogen bonds between not so closely packed cellulose fibres are weaker than the interfacial bond between the release agent and the cellulose carrier. Cohesive failure is less likely to happen with thermoplastic carriers, but some separation of the release coating was observed nonetheless with some particular materials combinations, in particular when low surface energy thermoplastic carriers were used, such as polyolefins. In this case, however, the failure was more interfacial. Regardless of the nature of the failure, if a substantial fraction of the release agent may be separated from the carrier material, it may be interesting, as illustrated in Figure 2(b), to profit of this debonding to actually separate the material stream in two fractions: a carrier rich fraction (26) and a release agent rich fraction (27) in a separating station (25). The separating station may comprise any known means for separating two bodies having differing physical and chemical properties, such as, for example, a cyclone, a floatation station, a filter, and ultrasonic or electrostatic separation means, and any combinations thereof.

The release agent rich fraction (27) may further be processed in a treating station (27a) to to be suitable for use as a filler or a binding agent in concrete, cementitious mixtures and coatings. Alternatively, the release agent rich fraction (27) may be added to a stream of cellulose insulation material based on uncoated waste paper, such as newspapers, magazines, packaging material, and the like, to enhance the properties thereof.

The carrier rich fraction (26) may further be processed in a treating station (26a) to produce, as discussed above in respect of station (26c) in Figure 2(a), an insulating material of more accurately controlled composition or, alternatively, to produce recycled paper by methods well known in the art in case of cellulose carriers. The recycled product (10a) can then be removed with conveying means (211). The further treatment of both fractions in treating stations (26a), (27a), in particular if it concerns producing recycled paper with the cellulose rich fraction, needs not necessarily be carried out continuously in the same production apparatus but, as illustrated by the broken lines (26), (27), it may be carried out in another plant.

As illustrated schematically in Figure 3, the new insulating material (10) obtained with the method of the present invention may be applied in different forms and different ways to a surface; As shown in Figure 3(a) the insulating material (10) may be blown in a dry form with a gun (20) into a cavity (1 3) formed by two panels or walls or any retainer (14). In old houses, the material can be sprayed through a hole drilled on top of the outer panel of a wall. The insulation material (10) must be sprayed until it reaches the appropriate density. With this form of application settling is observed and may reach as much as 20% with state of the art cellulose insulation materials. It is usually observed that a lower degree of settling occurs with higher initial densities. The level of settling is very much reduced with the insulation material of the present invention since the silicone acts somewhat like a loose binder that stabilizes the structure. After settling of the material, the front panel may be withdrawn if desired as, depending on the degree of compaction thereof, the material will remain in place. The application of the insulating material (10) by dry blowing has the advantages of minimizing air gaps especially around inserts or intricate regions. It is, however, recommended to call an experienced installer for dry spraying the insulation material as the control of the density, settling, and pressure applied on the panels must all be controlled carefully.

The insulating material (10) in a particulate form may also be sprayed in place with a gun (20) against a wall (14) or even a horizontal ceiling by mixing it with a fluid like water. Upon drying the material will remain in place thanks to the hydrogen bonds between cellulose hydroxyl groups created by the fluid such as water. In some cases, in particular -albeit not exclusively- when the carrier (2) is a thermoplastic material, the use of a binder may be necessary in this type of applications. This technique of wet spraying is schematically illustrated in Figure 3(b) and it has the advantage over dry spraying of requiring no cavity (13) to fill, of generating substantially less dust upon application, and of settling much less. Air gaps are minimized with this technique, thus enhancing the insulation properties of the material. Here again, calling an experienced installer is highly recommended.

As an alternative to supplying the insulation material (10) in a particulate form for spraying, it can be supplied as preforms (10A) such as batts, sheets, mats, tiles, or even bricks. Here again, the use of a binder may be necessary, but not mandatory, as with cellulose materials sufficient integrity of the preforms may be obtained through a wet process. If a binder is used, it can be organic, like a glue or a resin, or mineral like cement, gypsum, etc. Fillers like sand, talc, etc. may be used too. Alternatively, the preforms (10A) may have a sandwich structure with two skins holding a central core made of the insulating material (10). In some instances, a single skin may be sufficient. The role of the skins is not restricted to mechanical integrity of the preforms (10A), but may advantageously act as a barrier against moisture, gas, radiations, etc. and can therefore be useful when a binder is used too.

As illustrated in Figure 3(c), such preforms can then simply be applied and fixed to a wall by means well known in the art. This solution has the advantage of being very simple and of requiring no particular expertise for its implementation, and it also generates virtually no dust in situ. On the other hand, air gaps are more difficult to avoid then with spraying techniques.

Figure 3 illustrates embodiments of applications in the insulation of a building. The insulation material of the present invention can be used in other fields such as the transportation industry, e.g., in applications as disclosed e.g., in DE20200550114581 and US2002025421 for the automotive industry and in DE4331567 for the aircraft industry. It can also be used on sound dampening wall along roads. Other applications can be found in the textile industry, as fill for quilted garments and blankets or even for upholstery and mattresses.

When cellulose insulation material has a lower "embodied energy" than e.g., glass fibres or rockwool insulation materials, the insulation material of the present invention has an even lower embodied energy than most traditional cellulose insulation materials for the following reasons. Traditional cellulose material is generally made of recycled paper of various origins, including newspapers, printed matter, wrapping papers, etc., which may need an additional treatment to eliminate inks and volatile components before being reprocessed into insulation material. This additional treatment usually involves a thermal treatment with chemicals, which is not necessary with waste liners collected from industrial end users, as the material is homogeneous and devoid of any printed matter. Another advantage of the insulation material of the present invention is that packaging volume can be reduced with respect to most traditional cellulose insulation materials on the market. Particulate cellulose insulation material is generally supplied in 10-15 kg packages with a degree of compaction which is limited by the ability of the compacted material to fluff up to the desired density upon dry spraying thereof. Generally, the degree of compaction of the packaged materiel is about double of the desired density of the insulation material in place when applied dry, i.e., with one package of volume V₁, a cavity of volume of the order of 2 x V₁ can be filled. It has been found that insulation material according to the present invention could be dry sprayed to a desired density even when the material was packaged with a degree of compaction of three or four (i.e., down to a volume of the order of ½ V₁). Without being bound by any theory, it is believed that this is explained by the fact that cellulose liners being produced from virgin material, the cellulose fibres are longer and stiffer than the ones of recycled newspapers and the like. Hence the particulate material obtained by grinding used liners has a higher spring force than most traditional cellulose insulation materials which allows it to recover a high degree of fluffiness after compaction to at least 400% in a package. The higher degree of compaction is, of course, highly advantageous for storage and distribution of the products. These two advantages: no thermal and chemical deinking stage required and higher degree of compaction of the packaged material lowers substantially the embodied energy of the insulation material of the present invention in both the energy required to manufacture the material and in the energy to deliver it.

Beside providing a cheap and easy recycling option for the problematic release coated sheet carriers, the insulation material obtained with the method of the present invention is advantageous over other similar materials of the prior art, even without separation of the release coating from the carrier, because the presence of the generally crosslinked release agent such as silicone gives the particulate material a cohesion which cannot be found in the prior art materials without the addition of a separate binder. This cohesion is advantageous in dry spray applications (cf. Figure 3(a)) because it reduces substantially the amount of dust upon spraying, and it especially reduces substantially the level of settling of the material, yielding an insulation layer stable in time and homogeneous throughout the height of the insulated wall. In wet spraying applications (cf. Figure 3(b)), a higher mechanical integrity of the sprayed layer is reached thanks to the release agent. For the manufacture of preforms (10A) such as batts, sheets, etc. (cf. Figure 3(c)), less to no binder is needed to yield self supporting preforms. In all cases, the presence of silicone particles dispersed within the bulk of the insulating material confers a degree of water repellence, which contributes to preserving the material from moisture. Furthermore, traditional insulation materials are made of recycled paper, of different origins (landfills) and of unknown nature (newspaper, packaging, etc.). For this reason and in spite of any thermal treatments discussed above, such insulation materials may still contain an undesired amount of VOC (volatile organic compounds) which contribute to indoor air pollution; and may be responsible for the development of allergies (cf. e.g., http://www.healthyhouseinstitute.com/a_688-Cellulose_Insulation). With the present invention, it is possible to obtain an insulation material which, apart from the flame retardants, is virtually free of any VOC. In particular, since large volumes of release coated sheet material can be recovered directly from companies, a control on the quality of the waste material to be recycled never afforded to date is possible, thus allowing to provide a "premium version" of VOC-free insulation material. In some cases it also provides a very efficient solution to the production of recycled paper from waste release coated sheet material.

## Claims

1. A method for treating waste material comprising the following steps:
(a) Collecting release coated cellulose or polymeric sheets from producers and end-users thereof in the form of dense, bulky masses, such as rolls and stacks;
(b) Pre-shredding the dense, bulky masses of release coated sheets into smaller, less dense masses in preparation to the following process steps;
(c) Preparing the pre-shredded material by mixing, separating foreign bodies like metals, etc., and feeding it to a grinding station (23), (24);
(d) In one or several grinding stations (23), (24) shredding and grinding the materials into small pieces, preferably into stripes of an average length comprised between 5 and 30 mm, more preferably, between 7 and 20 mm, most preferably between 10 and 15 mm and optionally comminuting the small pieces into smaller particles having an average size smaller than 4 mm, preferably smaller than 2 mm; more preferably smaller than 1 mm;
(e) Optionally adding additives selected from flame retardant, hydrophobic material, pesticide and mixtures thereof and mixing them with the recycled material;
(f) Optionally forming a batt or a sheet by a wet process and/or by adding a binder.

2. Method according to claim 1, wherein at some stage, preferably but not exclusively, at stage (c) or (d), the treated material is blended with cellulose or polymeric sheet waste material from other origins.

3. Method according to claim 1 or 2, wherein the one or several grinding operations allow, in the absence of any chemical treatment, the separation of a substantial fraction of the release coating from the sheet carrier and the two fractions are separated in a separating station (25), separating the incoming stream into a first, carrier rich fraction (26) and a second, release agent rich fraction (27).

4. Method according to the preceding claim, wherein the separating station (25) comprises one or more of a cyclone, a floatation station, a filter, and ultrasonic or electrostatic separation means.

5. Method according to claim 3 or 4, wherein the carrier rich fraction (26) is further processed in a shaping station (26a) to form insulating batts or sheets,

6. Method according to claim 3 or 4, wherein the carrier comprises essentially cellulose and the cellulose rich fraction (26) is further processed in a shaping station (26a) to form sheets of paper.

7. Method according to claim 3 or 4, wherein the carrier comprises essentially thermoplastic films and the thermoplastic rich fraction (26) is further recycled in a thermoplastic recycling process.

8. Method according to claim 3 or 4, wherein the release agent rich fraction (27) is further processed in a station (27a) to be suitable for use as a filler or a binding agent in concrete, cementitious mixtures and coatings.

9. Method according to any of the preceding claims, wherein the release coated cellulose or polymeric sheets consists of liners for holding self-adhesive labels or films, and the producers and end-users are selected from one or several of: manufacturers of self-adhesive label base material, liner manufacturers, label printers, producers of goods on which are applied self-adhesive labels.

10. Method according to any of the preceding claims, wherein the release agent is one of silicone, wax, paraffin, or fluorinated material.

11. Use of recycled material obtained from the method of any of the preceding claims for insulating thermally and/or acoustically any of:
• a wall or a panel in the field of buildings,
• a panel in the field of transportation,
• a sound dampening wall along roads;
• a quilted piece of garment or blanket, or for filling
• a mattress, or upholstery,
• a package in the field of packaging and storage and transportation of goods.

12. Use of the material obtained with the method of any of claims 1 to 10 as casing soil used for growing some vegetables and mushrooms or as additive to earth to enhance the water balance and water flow in said soil or earth.

13. Use of the cellulose rich fraction obtained with the method of claim 6 to produce recycled paper.
